# FASCICULE DE BREVET EUROPEEN

(11) **EP 3 433 007 B1**
(45) Date de publication et mention de la délivrance du brevet: **21.06.2023**
(21) Numéro de dépôt: 17712150.6
(22) Date de dépôt: 22.03.2017
(51) Int. Cl.: B01D 63/12, B01D 65/00, B01D 63/06

(54) **DISPOSITIF DE FILTRATION MEMBRANAIRE DE LIQUIDE SOUS PRESSION**
MEMBRANFILTRATIONSVORRICHTUNG FÜR UNTER DRUCK STEHENDE FLÜSSIGKEIT
PRESSURISED LIQUID MEMBRANE FILTRATION DEVICE

(30) Priorité: 23.03.2016 FR 1652491
(43) Date de publication de la demande: 30.01.2019
(73) Titulaire: Veolia Water Solutions & Technologies Support, 94417 Saint-Maurice Cedex (FR); Societe Internationale de Dessalement, 75009 Paris (FR)
(72) Inventeur: BAUJAT, Vincent, 78150 LE CHESNAY (FR); THUBERT, Jean-Baptiste, 75011 Paris (FR)
(74) Mandataire: Vidon Brevets & Stratégie
(86) Numéro de dépôt international: PCT/EP2017/056836
(87) Numéro de publication internationale: WO 2017/162745

(56) Documents cités:
- WO-A1-98/23361
- WO-A1-2007/043879
- WO-A1-2012/105835
- WO-A2-2015/044783
- WO-A2-2016/151408
- NL-A- 7 905 957
- US-A1- 2012 006 749

## Description

### 1. Domaine de l'invention

Le domaine de l'invention est celui de la conception et de la réalisation des installations mises en oeuvre pour filtrer sous pression des liquides à l'aide de modules de filtration membranaire.

L'invention concerne notamment mais non exclusivement de telles installations pour la filtration des eaux salées ou saumâtres en vue de la production d'eau potable.

L'invention concerne tant les installations mettant en oeuvre des modules de microfiltration que celles mettant en oeuvre des modules d'ultrafiltration, de nano- filtration ou de filtration par osmose inverse. Toutefois, l'invention trouve tout particulièrement son intérêt dans le cadre de la réalisation d'installations mettant en oeuvre des modules de filtration par osmose inverse.

### 2. Art antérieur

On connaît dans l'art antérieur différents procédés pour filtrer sous pression des liquides en vue de les purifier. Parmi ces techniques, celles mettant en oeuvre une filtration sur membranes sont abondamment utilisées, notamment dans le cadre de la production d'eau potable ou encore dans celle de la production d'eaux de procédé. Ces membranes ont une structure poreuse qui leur permet de limiter le transfert d'un ou plusieurs solutés par rapport à l'eau.

Les modules de filtration membranaire mis en oeuvre dans le cadre de telles installations peuvent intégrer des membranes présentant des pores de taille plus ou moins importante en fonction des composés à séparer du liquide à filtrer. Ainsi, les membranes de micro-filtration ont des pores de 0,1 µm à 10 µm, celles d'ultra filtration des pores de 10 nm à 1 µm, celles de nano filtration des pores de quelques nanomètres. Enfin les membranes d'osmose inverse présentent une structure encore plus dense.

Dans les installations de production d'eau potable, les modules de filtration membranaire sont généralement des modules de filtration membranaire par osmose inverse. Ces modules sont disposés en série au sein d'enveloppes supportant la pression de filtration (le terme anglais « *pressure vessel* » est couramment utilisé par l'homme de l'art pour désigner de telles enveloppes).

Ces enveloppes sous pression présentent une forme essentiellement cylindrique à l'intérieur de laquelle sont disposés en série les modules de filtration membranaire présentant eux-mêmes une forme cylindrique. Ces enveloppes sont fermées par des pièces d'extrémité conçues pour supporter la pression. En pratique, elles présentent couramment une taille leur permettant d'accueillir jusqu'à huit modules positionnés en série. L'eau à filtrer est introduite à une extrémité de l'enveloppe sous pression et traverse les membranes de filtration de l'extérieur des modules de filtration membranaire vers l'intérieur de ceux-ci. Le liquide filtré (perméat) est collecté par un tube de récupération disposé selon l'axe longitudinal des modules. Des dispositifs inter-connecteurs, se présentant sous la forme de portions de tube pourvue à chacune de leurs deux extrémités de moyens de solidarisation à des modules de filtration membranaire ou à un autre élément, permettent de connecter entre eux les tubes de récupération du perméat des différents modules de filtration membranaire disposés en série à l'intérieur de l'enveloppe sous pression. Le perméat est récupéré à l'extrémité opposée de l'enveloppe sous pression grâce à des collecteurs de perméat, chacun reliés à des moyens d'évacuation de perméat.

En pratique, ces enveloppes sont associées en nombre pour former des batteries (le terme anglais « *skid* » est couramment utilisé par l'homme de l'art pour désigner de telles batteries). Des collecteurs sont disposés à la sortie des enveloppes sous pression pour collecter le perméat. Ces différents collecteurs sont reliés à un collecteur commun.

Beaucoup d'installations utilisant cette technologie comprennent un nombre important de batteries. C'est notamment le cas des installations de production d'eau potable à partir d'eau de mer, qui comprennent souvent plus de dix batteries, chacune pouvant regrouper jusqu'à deux cents enveloppes sous pression accueillant chacune huit modules de filtration membranaire montés en série.

Un inconvénient de l'utilisation de cette technologie à grande échelle est constitué par le temps nécessaire au montage des installations la mettant en oeuvre. Ce temps est fonction du très grand nombre d'éléments les constituant à assembler. Il représente un poste important dans le coût de ces installations.

Par ailleurs, le nombre d'enveloppes sous pression pouvant être installées dans un volume d'installation donné est limité par les espaces minima à respecter entre ceux-ci pour leur entretien et leur maintenance. La taille des installations, à une capacité de production donnée, ne peut donc être réduite au delà d'un certain seuil. La surface disponible pour l'implantation de telles installations peut donc constituer un facteur limitant la mise en oeuvre de cette technologie.

Quelle que soit l'échelle à laquelle cette technologie est mise en oeuvre, les enveloppes sous pression, ainsi que les moyens d'évacuation de liquide filtré et de concentrat, sont exposés à l'air libre. En cas de défaillances d'une pièce de ces éléments, il existe donc un risque de projection de celle-ci sous l'effet de la pression, qui peut être très élevée et en pratique aller jusqu'à 80 bar dans le cas de l'osmose inverse. Une telle projection est susceptible d'avoir des conséquences dommageables, notamment pour les personnels de maintenance.

Un autre inconvénient résulte du fait que les enveloppes des membranes de filtration présentent un diamètre relativement faible, en général au maximum de 16 pouces (soit environ 41 cm). Ce faible diamètre implique une difficulté d'utiliser pour leur réalisation de l'acier revêtu d'une couche de traitement lui permettant de résister à la corrosion. Un matériau composite, constitué de résine renforcée par des fibres de verre (« *Glass Reinforced Plastic,* en abrégé GRP») est donc utilisé. Outre que ce matériau est coûteux, il présente l'inconvénient de mal résister aux forces de cisaillement se produisant aux interfaces entre l'enveloppe et les pièces qui coopèrent avec celle-ci à ses extrémités. Ces pièces d'extrémité doivent donc quant à elles être réalisées en acier traité contre la corrosion. Néanmoins, la résistance au niveau de ces interfaces reste à améliorer. Les documents WO98/23361 A1, WO2015/044783 A2, WO2007/043879 A1, NL7905957 A, US2012/006749, WO2012105835 décrivent des dispositifs assemblant une pluralité de modules de filtrations.

### 3. Objectifs de l'invention

Un objectif de la présente invention est de proposer un dispositif de filtration membranaire sous pression de liquides permettant de simplifier la conception et le montage des installations de traitement de liquides mettant en oeuvre cette technologie à grande échelle.

Egalement un objectif de la présente invention est de décrire un tel dispositif qui puisse être réalisé à moindre coût, notamment en diminuant la quantité de matériau composite devant à capacité égales être utilisée.

Encore un objectif de la présente invention est de divulguer un tel dispositif qui permette de densifier les installations, c'est-à-dire, à capacité de traitement égale, qui puisse occuper un volume inférieur à celui nécessité par l'art antérieur.

Encore un objectif de la présente invention est de proposer un tel dispositif qui permette de réduire les risques de projection de pièces sous pression en cours d'utilisation et ainsi de renforcer la sécurité.

### 4. Exposé de l'invention

Ces objectifs, ainsi que d'autres qui apparaitront par la suite, sont atteints grâce à l'invention décrite dans la revendication 1, qui concerne un dispositif pour la filtration sous pression de liquide, ledit dispositif comprenant une pluralité de séries de modules de filtration membranaire, des moyens d'amenée de liquide à filtrer, des moyens d'évacuation de liquide filtré, et des moyens d'évacuation de concentrat, caractérisé en ce qu'il comprend une enceinte commune cylindrique sous pression accueillant une structure à base de résine pourvue de logements longitudinaux parallèles entre eux à l'intérieur desquels sont disposés lesdites séries de modules de filtration membranaire.

On notera que l'on entend dans la présente description par « série de modules de filtration membranaire » au moins deux modules de filtration membranaire montés en série grâce à des éléments d'interconnexion de sorte que leurs canaux d'évacuation de liquide filtré communiquent.

L'invention propose ainsi de ne plus confiner de telles série de modules de filtration membranaire dans une pluralité d'enveloppes dont chacune doit résister à la pression de filtration mais de prévoir l'ensemble des modules de filtration dans une enceinte unique cylindrique résistant à cette pression, le matériau à base de résine de la structure dans laquelle sont positionnées les modules de filtration membranaire permettant de transmettre cette pression à l'enceinte en question. La caractéristique selon laquelle ladite enceinte est cylindrique est essentielle car cette enceinte est conçue pour reprendre la pression du liquide en cours de filtration au sein des modules. Ce caractère cylindrique permet d'optimiser cette fonction de l'enceinte. La résine constituant la structure pourvue de logements longitudinaux parallèles entre eux à l'intérieur desquels sont disposées lesdites séries de modules de filtration membranaire ne permet en effet pas à elle seule de reprendre cette pression. Cette résine permet seulement de transmettre cette pression à l'enceinte cylindrique. L'invention permet ainsi de diminuer le nombre d'éléments devant être agencés au moment de la construction des installations de filtration. En effet, le dispositif selon l'invention peut être livré et directement raccordé au réseau de liquide à filtrer et aux évacuations de liquide filtré et de concentrat. L'invention permet donc de s'affranchir de l'opération d'assemblage sur site des différentes enveloppes sous pression (« *pressure vessels* ») des modules de filtration membranaire les unes aux autres en batteries (« *skids* »). L'invention permet ainsi de gagner sur site un temps de montage très important, le dispositif selon l'invention pouvant être facilement transporté et livré prêt à l'usage sur celui-ci.

En pratique, la capacité de filtration du dispositif selon l'invention, pourra être très élevée et correspondre préférentiellement à au moins celle d'une batterie (« *skid* ») de l'art antérieur.

Le dispositif selon l'invention, en confinant l'ensemble des séries de modules de filtration membranaire au sein d'une même enceinte, présente aussi l'avantage de diminuer très fortement le risque accidentel d'éjection de pièces sous l'effet de la pression. Ainsi, ce dispositif présente une sécurité d'utilisation très nettement améliorée par rapport à l'art antérieur où les opérateurs de maintenance sont exposés à chaque enveloppe sous pression *(« pressure vessels*»).

L'invention présente aussi l'avantage de densifier les installations la mettant oeuvre par rapport à celles mettant en oeuvre la technique antérieure. En effet, les séries de modules de filtration peuvent être positionnées côte à côte dans l'enceinte de filtration unique, ce qui n'est pas le cas dans l'art antérieur où un espace minimum doit être observé entre les séries de modules montées en parallèle.

De plus, selon l'invention, les séries de modules de filtration membranaire installés dans les logements de la structure à base de résine sont intégrés dans des tubes dans lesquels sont montées les membranes qui n'ont pas à présenter les mêmes propriétés de résistance à la pression que celles des enveloppes sous pression. Ces tubes peuvent donc présenter des parois moins épaisses que celles de ces enveloppes et ainsi permettre un gain de matériau.

On notera aussi que la présente invention permet ainsi d'effectuer des économies substantielles sur les quantités de matériaux résistant à la pression devant être mis en oeuvre.

Selon une variante préférentielle de l'invention, lesdites séries de modules de filtration membranaire sont montées parallèles en faisceaux de N séries de modules dans ladite enceinte commune cylindrique sous pression. Un tel montage en faisceaux permet de faciliter la réalisation de l'invention. Par ailleurs, en cas de dysfonctionnement, il est ainsi possible de mettre à l'arrêt un tel faisceau sans nécessité de mettre en arrêt toute l'installation.

Selon les modes de réalisation N pourra varier mais sera préférentiellement égal à 7. La section des modules étant circulaire, il est ainsi possible d'optimiser le nombre de modules dans un faisceau dont la section transversale s'inscrit dans un cercle.

Préférentiellement, lesdits moyens d'évacuation de liquide filtré comprennent des collecteurs de liquide filtré prévus au sein de ladite enceinte. Chaque collecteur permet la collecte de liquide filtré provenant de plusieurs séries de modules de filtration membranaire, avantageusement d'un même faisceau.

Ainsi, l'enceinte commune cylindrique sous pression du dispositif selon l'invention accueille aussi en son sein les organes de collecte du liquide filtré. Ceux-ci peuvent ainsi être pré-assemblés aux faisceaux de modules. Prévus à l'intérieur de l'enceinte, ils ne peuvent pas être éjectés accidentellement à l'extérieur de celle-ci vers des opérateurs évoluant à proximité du dispositif. Ceux-ci se trouvent ainsi protégés par le bouclier que forme l'enceinte.

Par ailleurs, en cas de dysfonctionnement d'un ou plusieurs module de filtration dans un des faisceaux conduisant à un liquide filtré de mauvaise qualité à la sortie de celui-ci, la production de ce faisceau ou d'une partie de dispositif intégrant celui-ci peut être dérivée et la qualité produite par la ou les parties du dispositif n'intégrant pas ce faisceau maintenue.

Préférentiellement, certains des collecteurs de liquide filtré sont prévus à une extrémité du dispositif tandis que d'autres sont prévus à l'extrémité opposée de celui-ci. Ainsi, il est possible de répartir la production de liquide filtré aux deux extrémités du dispositif, ce qui présente un intérêt pratique pour l'exploitation des installations intégrant le dispositif selon l'invention.

Selon une variante préférentielle, lesdits collecteurs sont reliés, à l'intérieur de ladite enceinte, à des canalisations de sortie, chaque canalisation de sortie desservant une partie des collecteurs. Selon une variante avantageuse, ces canalisations de sortie sont montées transversalement à l'axe longitudinal de ladite enceinte. Ainsi, toute la production de liquide filtré ne sort pas du dispositif par une canalisation unique. En cas de dysfonctionnement sur une des séries de modules de filtration membranaire, seule la production sortant par la canalisation desservant cette série de module peut être dérivée, le liquide filtré sortant par les autres canalisations restant en production.

Ainsi, la jonction entre les collecteurs et ces canalisations de sortie est prévue à l'intérieur de l'enceinte. En cas de surpression accidentelle et d'éjection de pièces à ce niveau sous l'effet de la pression, l'enceinte protège les opérateurs qui se trouveraient à proximité.

Selon un aspect préférentiel, des butées sont positionnées aux extrémités desdites séries de modules de filtration membranaire. Ces butées sont prévues pour caler les extrémités des modules membranaires. Un tel calage permet de s'assurer que le liquide filtré est acheminé correctement vers les moyens d'évacuation de celui-ci.

Egalement préférentiellement, des tirants longitudinaux sont prévus parallèles auxdites série de modules de filtration membranaire.

Selon une variante permettant de renforcer encore la rigidité du dispositif, certains des tirants présentent des extrémités qui peuvent être solidarisées, par exemple par boulonnerie, aux butées citées ci-dessus. Le calage des séries de modules de filtration membranaire, préférentiellement organisées en faisceau, s'en trouve encore amélioré.

Egalement selon une variante, d'autres de ces tirants présentent des extrémités qui peuvent être solidarisées, par exemple par boulonnerie auxdits collecteurs. Ceci permet de sécuriser le positionnement de ces collecteurs.

On pourra prévoir de réaliser l'enceinte du dispositif selon la présente invention selon différentes formes. Toutefois, préférentiellement, ladite enceinte présentera une ou deux extrémités hémisphériques. Lorsque l'on choisira d'associer deux dispositif, chaque enceinte présentera avantageusement une extrémité hémisphérique et une base cylindrique, lesdites enceintes étant alors associées par leurs bases cylindriques.

L'extrémité hémisphérique et/ou la base cylindrique pourront avantageusement être équipée d'un trou d'homme qui permettra à un opérateur de s'introduire dans l'enceinte, à des fins de contrôle ou de maintenance.

En tant que matériau à base de résine on utilisera un mélange de charge neutre et de résine polymère, ledit mélange de charge neutre étant choisi parmi le sable, le liège ou le plastique, et de résine polymère, étant choisie parmi la résine époxyde, la résine polyester ou la résine vinylester Avantageusement, la résine en question présentera un module élastique faible, en pratique préférentiellement inférieur à 6000 MPa et une faible viscosité à la coulée, préférentiellement inférieure à 6000 MPa.S. On notera que cette résine assurera l'étanchéité entre les extrémités des modules de filtration membranaire et l'enveloppe cylindrique.

### 5. Liste des Figures

L'invention, ainsi que les différents avantages qu'elle présente seront plus facilement compris grâce à la description qui va suivre d'un mode de réalisation de celle-ci donnée à titre illustratif et non limitatif, en référence aux dessins dans lesquels :
la figure 1 représente une vue en perspective, partiellement écorchée, d'un ensemble de deux dispositifs selon la présente invention associés entre eux ;
la figure 2 représente une vue latérale des deux enceintes associés entre elles de l'ensemble représenté à la figure 1 ;
la figure 3 représente vue partielle en perspective d'extrémités de modules de filtration membranaire de l'ensemble représenté à la figure 1 associées à des tirants ;
la figure 4 représente une vue en perspective d'une butée permettant le calage des modules de filtration membranaire de l'ensemble représenté à la figure 1 ;
la figure 5 représente une vue en perspective en position verticale de la structure à base de résine d'une des enceintes de l'ensemble représenté à la figure 1 ;
la figure 6 représente une vue de dessus de la structure à base de résine représentée à la figure 5 ;
la figure 7 représente une vue partielle en perspective d'extrémités de modules de filtration membranaire pourvues d'un collecteur commun ;
la figure 8 représente une vue partielle en perspective d'un faisceau de sept séries de modules de filtration membranaire relié à ses canalisations d'évacuation du perméat qu'il produit ;
la figure 9 représente une vue partielle en perspective écorchée d'une des extrémités hémisphériques d'un des dispositifs représenté à la figure 1 ;
la figure 10 représente une vue partielle en perspective écorchée de la partie centrale de l'ensemble représenté à la figure 1.

### 6. Description d'un mode de réalisation

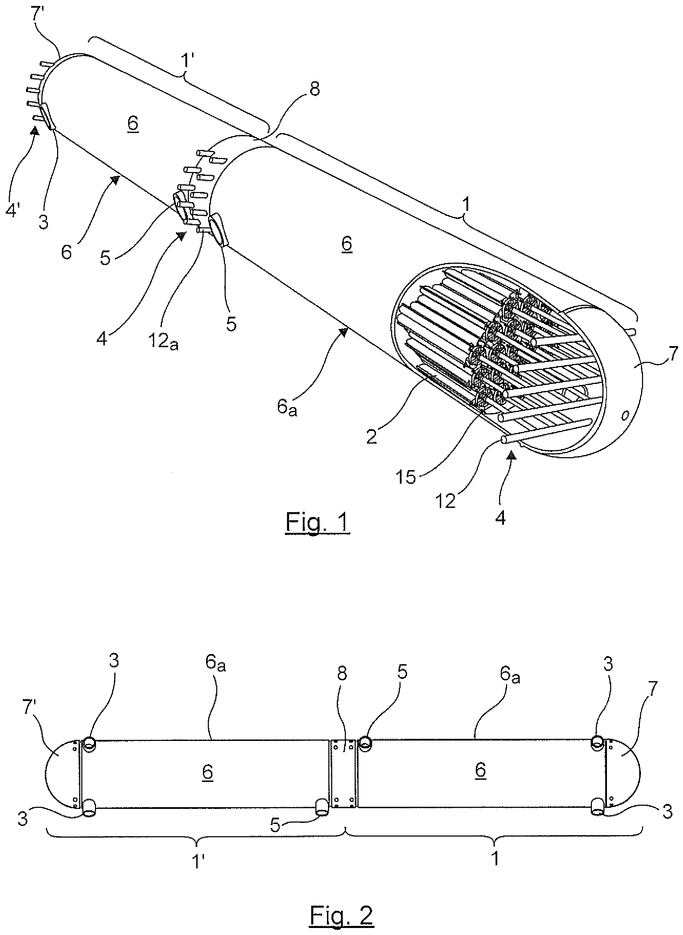

En référence aux figures 1 et 2, le mode de réalisation représenté comprend deux dispositifs 1, 1' selon l'invention associés entre eux. Chacun de ces dispositifs incluent des moyens d'amenée 3 de liquide à filtrer incluant une canalisation d'amenée, des moyens décrits ci-après pour filtrer le liquide en question par osmose inverse communiquant avec des moyens d'évacuation de liquide ainsi filtré également décrits ci-après, et des moyens d'évacuation de concentrat 5 incluant une canalisation d'évacuation.

Chaque dispositif 1,1' comprend une enceinte 6 présentant un corps 6a, une extrémité hémisphérique 7 et une base cylindrique 8, celle-ci étant commune au deux dispositifs 1,1'. Les enceintes 6 des deux dispositifs 1, 1' présentent un volume commun. Ces enceintes 6 sont réalisées en un acier permettant de supporter des pressions pouvant atteindre 80 bar et revêtu d'une peinture anti corrosion.

Dans chaque enceinte cylindrique 6 sont installées des séries de modules 2 de filtration membranaire par osmose inverse montées parallèles entre elles dans des logements prévus à cet effet. Les membranes de ces modules sont de type spiralées. Les membranes de chaque série de modules 2 sont incluses dans un tube commun en matériau plastique renforcé par de la fibre de verre. Les modules de filtration membranaire sont montés en série de huit à l'intérieur de ces tubes grâce à des éléments d'interconnexion de sorte que leurs canaux d'évacuation de perméat communiquent entre eux. Dans ce mode de réalisation, les séries de modules de filtration sont montées à l'intérieur de l'enceinte de façon telle que le perméat produit soit pour certaines récupéré à une extrémité de l'enceinte 6 et pour les autres à l'extrémité opposée de celle-ci. En pratique, jusqu'à la moitié du perméat produit est récupérée au niveau de l'extrémité hémisphérique 7 de l'enceinte 6 tandis que l'autre moitié est récupérée au niveau de la base 8 de celle-ci.

Comme il sera explicité ci-après plus en détails, les séries de modules 2 de filtration membranaire sont pré-assemblés en faisceaux, chaque faisceau regroupant sept de ces séries. Dans ces faisceaux, une série de modules est prévue au centre, les 6 autres étant disposées parallèles autour de celle-ci.

Chaque faisceau de séries de modules 2 de filtration membranaire est équipé à chacune de ses extrémités d'un collecteur 10 collectant le perméat produit par ce faisceau. Ces collecteurs font partie de moyens d'évacuation de ce perméat qui incluent aussi des canalisations 12, 12a reliés aux collecteurs 10 par des canalisations de liaison 15 et dont seules les extrémités font saillies de l'enceinte 6.

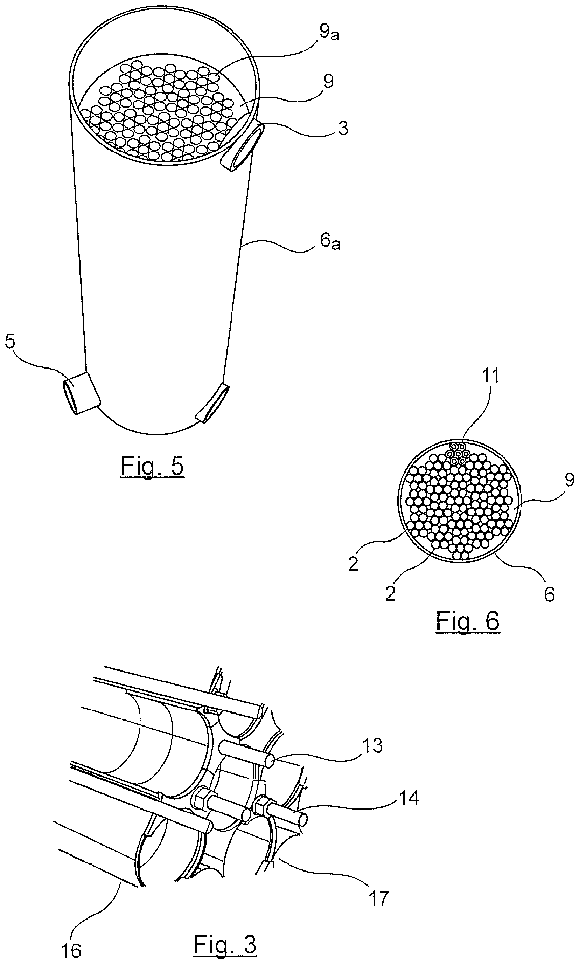

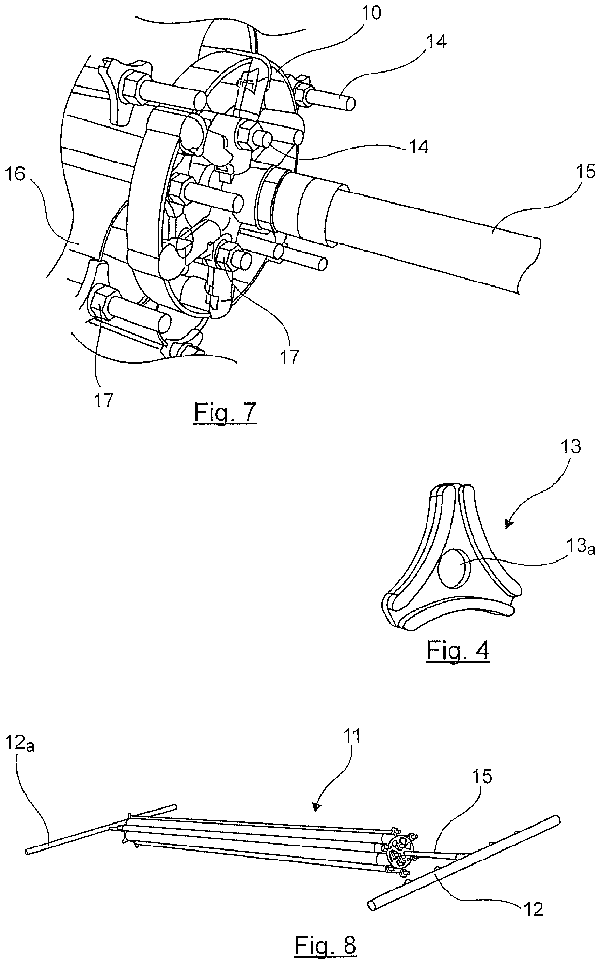

En référence à la figure 3, les séries de modules de filtration incluent des tubes 16 en matériau plastique renforcée par des fibres de verres accueillant les membranes et les interconnexions les reliant (non représentés sur cette figure pour les besoin de clarté de la description). Parallèlement à ces tubes, des tirants 14 qui s'étendent sur tout ou partie de la longueur des tubes 16 sont prévus pour renforcer la structure. L'extrémité de certains de ces tirants 14 coopèrent avec des butées 13, représentées plus en détail à la figure 4. Ces butées sont pourvues d'une ouverture circulaire centrale 13a accueillant ces extrémités qui peuvent y être solidarisés par un écrou 17.

En référence à la figure 5, qui représente de façon schématique en position verticale la partie 6a d'une des enceintes 6 de l'ensemble de dispositifs selon l'invention représenté aux figures 1 et 2, les séries de modules de filtration 2 sont installées dans des logements cylindriques 9a prévus dans une structure 9 à base de résine conçue pour transmettre la pression de filtration à laquelle sont soumises les membranes à la partie 6a de l'enceinte. L'ensemble de cette partie 6a, de ce matériau 9 et des séries de modules de filtration 2 évoque un barillet.

Lors de la fabrication des dispositifs selon l'invention, la partie 6a de l'enceinte 6 est étanchée en son fond et positionnée verticalement. Des tubes fins sont positionnés parallèles entre eux dans l'enceinte et le matériau à base de résine, ou des précurseurs ou composants de celui-ci, est coulé dans l'enceinte. Après durcissement du matériau à base de résine, les tubes forment les logements 9a. Dans le présent mode de réalisation, ce matériau à base de résine est obtenu par mélange de résine polymère et d'une charge qui, dans le présent mode de réalisation est du sable. Après mise à l'horizontale de la partie 6a de l'enceinte, les collecteurs de perméat tels que décrits ci-après sont raccordés à l'extrémité des séries de modules de filtration membranaire, les moyens d'amenée de liquide à filtrer, les moyens d'évacuation de permeat et de concentrat son installées et les extrémités hémisphériques 7 sont positionnés pour fermer l'enceinte 6.

Dans ce mode de réalisation, la taille de l'enceinte 6 permet d'accueillir, comme on peut le voir sur la figure 5, dix-neuf faisceaux de sept tubes, soit 133 séries de modules de filtration membranaire présentant un diamètre de 8 pouces (soit environ 20 cm). Bien évidemment, dans d'autres modes de réalisation, les diamètres des modules utilisés et la taille de l'enceinte pourront être différents pour conduire à des dispositifs selon l'invention de capacités différentes.

Comme représenté aux figures 7 et 8, chaque faisceau 11 est doté à chacune de ses extrémités d'un collecteur 10 de perméat relié par des canalisations de liaison 15 à des canalisations 12 d'évacuation de perméat. Chaque collecteur permet de recueillir tout ou partie du perméat, en fonction des conditions d'exploitation, des séries des modules de filtration du faisceau 11. Les tirants 14 qui ne sont pas solidarisées au butées 13 sont solidarisées à ces collecteurs 10 grâce à des boulons 17.

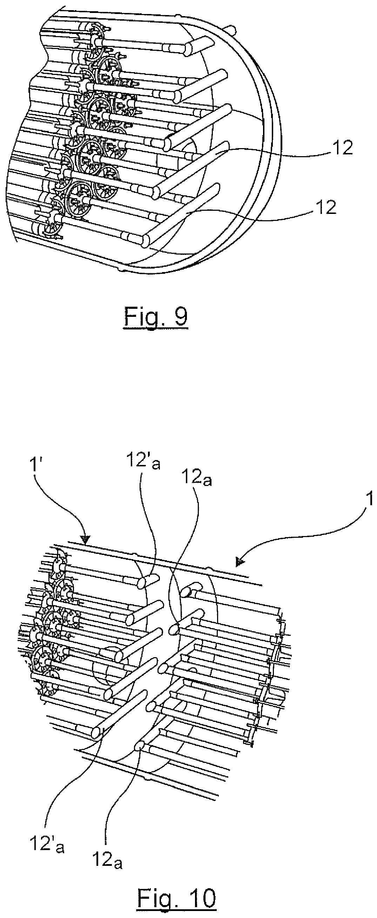

En références aux figures 9 et 10, les extrémités hémisphérique 7 et les bases 8 de l'enceinte de chaque dispositif 1, 1' sont conçues pour ménager un espace suffisant pour permettre l'accueil d'un opérateur qui accédera à celui-ci par un trou d'homme (non représenté) prévu à chacune de ces extrémités, à des fins de contrôle et de maintenance des dispositifs.

## Revendications

1. Dispositif (1) pour la filtration sous pression de liquide, ledit dispositif comprenant :
une pluralité de séries de modules (2) de filtration membranaire montés en série grâce à des éléments d'interconnexion de sorte que leurs canaux d'évacuation de liquide filtré communiquent et dont les membranes sont de type spiralées,
des moyens d'amenée (3) de liquide à filtrer,
des moyens d'évacuation (4) de liquide filtré, et
des moyens d'évacuation (5) de concentrat,
**caractérisé en ce qu'**il comprend une enceinte (6) commune cylindrique sous pression accueillant une structure à base de résine polymère pourvue de logements longitudinaux (9a) parallèles entre eux à l'intérieur desquels sont disposées lesdites séries de modules (2) de filtration membranaire, ladite structure à base de résine polymère étant composée d'un mélange de charge neutre et de résine polymère, ledit mélange de charge neutre étant choisi parmi le sable, le liège et le plastique, et ladite résine polymère étant choisie parmi la résine époxyde, la résine polyester et la résine vinylester.

2. Dispositif (1) selon la revendication 1 **caractérisé en ce que** lesdites séries de modules (2) de filtration membranaire sont montées parallèles en faisceaux (11) de N séries de modules (2) dans ladite enceinte (6) commune cylindrique sous pression.

3. Dispositif (1) selon la revendication 2 **caractérisé en ce que** N est égal à 7.

4. Dispositif (1) selon l'une quelconque des revendications 1 à 3 **caractérisé en ce que** lesdits moyens d'évacuation (4) de liquide filtré comprennent des collecteurs (10) de liquide filtré prévus au sein de ladite enceinte (6) dont chacun permet la collecte du liquide filtré par plusieurs séries de modules (2) de filtration membranaire.

5. Dispositif (1) selon les revendications 2 ou 3, et 4 **caractérisé en ce que** lesdits collecteurs (10) de liquide filtré permettent chacun la collecte du liquide filtré par des séries de modules de filtration membranaire d'un même faisceau (11).

6. Dispositif (1) selon la revendication 5 **caractérisé en ce que** des collecteurs (10) sont prévus à une extrémité du dispositif tandis que d'autres sont prévus à l'extrémité opposée dudit dispositif (1).

7. Dispositif (1) selon l'une quelconque des revendications 4 à 6 **caractérisé en ce que** lesdits collecteurs (10) sont reliés, à l'intérieur de ladite enceinte (6), à des canalisations de sortie (12,12a), chaque canalisation de sortie (12, 12a) desservant une partie des collecteurs (10).

8. Dispositif (1) selon l'une quelconque des revendications 1 à 7 **caractérisé en ce que** des butées (13) sont positionnées aux extrémités desdites séries de modules (2) de filtration membranaire.

9. Dispositif (1) selon l'une quelconque des revendications 1 à 8 **caractérisé en ce que** des tirants longitudinaux (14) sont prévus parallèles auxdites série de modules (2) de filtration membranaire.

10. Dispositif (1) selon les revendications 8 et 9, **caractérisé en ce que** certains desdits tirants (14) présentent des extrémités qui peuvent être solidarisées auxdites butées (13).

11. Dispositif (1) selon l'une quelconques des revendications 8 à 10 lorsqu'elle dépende des revendications 4 à 7 **caractérisé en ce que** certains desdits tirants (14) présentent des extrémités qui peuvent être solidarisées auxdits collecteurs (10).

12. Dispositif (1) selon l'une des revendications 1 à 11 **caractérisé en ce que** ladite enceinte (6) présente au moins une extrémité hémisphérique (7).

## Patentansprüche

1. Vorrichtung (1) zur Druckfiltration einer Flüssigkeit, wobei die Vorrichtung umfasst:
eine Vielzahl von Modulreihen (2) zur Membranfilterung, die in durch Verbindungselemente in Serie montiert sind, so dass ihre Kanäle zur Ableitung von gefilterter Flüssigkeit verbunden sind, und deren Membranen spiralförmig sind,
Mittel zur Zufuhr (3) von zu filternder Flüssigkeit,
Mittel zur Ableitung (4) von gefilterter Flüssigkeit, und
Mittel zur Ableitung (5) von Konzentrat,
**dadurch gekennzeichnet, dass** sie einen gemeinsamen zylindrischen Gurt (6) unter Druck umfasst, der eine Struktur auf Basis von Polymerharz aufnimmt, die mit Längsaufnahmen (9a) versehen ist, die zueinander parallel sind und in denen die Modulreihen (2) zur Membranfiltration angeordnet sind, wobei die Struktur auf Basis von Polymerharz aus einem Gemisch von neutralem Füllstoff und Polymerharz zusammengesetzt ist, wobei das Gemisch von neutralem Füllstoff unter Sand, Kork und Kunststoff ausgewählt ist, wobei das Polymerharz unter Epoxidharz, Polyesterharz und Vinylesterharz ausgewählt ist.

2. Vorrichtung (1) nach Anspruch 1, **dadurch gekennzeichnet, dass** die Modulreihen (2) zur Membranfiltration parallel in Bündeln (11) zu N Modulreihen (2) in dem gemeinsamen zylindrischen Gurt (6) unter Druck montiert sind.

3. Vorrichtung (1) nach Anspruch 2, **dadurch gekennzeichnet, dass** N gleich 7 ist.

4. Vorrichtung (1) nach einem der Ansprüche 1 bis 3, **dadurch gekennzeichnet, dass** die Mittel zur Ableitung (4) von gefilterter Flüssigkeit Kollektoren (10) von gefilterter Flüssigkeit umfassen, die in dem Gurt (6) vorgesehen sind und von denen jeder das Sammeln der von mehreren Modulreihen (2) zur Membranfiltration gefilterten Flüssigkeit ermöglicht.

5. Vorrichtung (1) nach den Ansprüchen 2 oder 3 und 4, **dadurch gekennzeichnet, dass** die Kollektoren (10) von gefilterter Flüssigkeit jeweils das Sammeln der von Modulreihen zur Membranfiltration eines selben Bündels (11) gefilterten Flüssigkeit ermöglichen.

6. Vorrichtung (1) nach Anspruch 5, **dadurch gekennzeichnet, dass** Kollektoren (10) an einem Ende der Vorrichtung vorgesehen sind, während andere am gegenüberliegenden Ende der Vorrichtung (1) vorgesehen sind.

7. Vorrichtung (1) nach einem der Ansprüche 4 bis 6, **dadurch gekennzeichnet, dass** die Kollektoren (10) in dem Gurt (6) mit Ausgangskanälen (12, 12a) verbunden sind, wobei jeder Ausgangskanal (12, 12a) einen Teil der Kollektoren (10) beliefert.

8. Vorrichtung (1) nach einem der Ansprüche 1 bis 7, **dadurch gekennzeichnet, dass** Anschläge (13) an den Enden der Modulreihen (2) zur Membranfiltration positioniert sind.

9. Vorrichtung (1) nach einem der Ansprüche 1 bis 8, **dadurch gekennzeichnet, dass** Längsarme (14) parallel zu den Modulreihen (2) zur Membranfiltration vorgesehen sind.

10. Vorrichtung (1) nach den Ansprüchen 8 und 9, **dadurch gekennzeichnet, dass** manche der Längsarme (14) Enden aufweisen, die mit den Anschlägen (13) verbunden werden können.

11. Vorrichtung (1) nach einem der Ansprüche 8 bis 10, wenn er von den Ansprüchen 4 bis 7 abhängt, **dadurch gekennzeichnet, dass** manche der Längsarme (14) Enden aufweisen, die mit den Kollektoren (10) verbunden werden können.

12. Vorrichtung (1) nach einem der Ansprüche 1 bis 11, **dadurch gekennzeichnet, dass** der Gurt (6) mindestens ein halbkugelförmiges Ende (7) aufweist.

## Claims

1. Device (1) for the pressure filtration of liquid, said device comprising:
a plurality of series of membrane filtration modules (2) connected in series by interconnection elements so that their channels for the discharge of filtered liquid communicate and whose membranes are of spiral type,
means (3) for leading in liquid to be filtered,
means (4) for discharging filtered liquid, and
means (5) for discharging concentrate,
**characterized in that** it comprises a common cylindrical chamber (6) under pressure receiving a structure made of a polymer-resin-based structure provided with longitudinal housings (9a) parallel to one another, within which there are disposed said series of membrane filtration modules (2), said polymer-resin-based structure being composed of a mixture of neutral filler and polymer resin, said mixture of neutral filler being selected from sand, cork and plastic, and said polymer resin being selected from epoxy resin, polyester resin and vinylester resin.

2. Device (1) according to claim 1 **characterized in that** said series of membrane filtration modules (2) are mounted in parallel in bundles or sets (11) of N series of modules (2) in said common cylindrical chamber (6) under pressure.

3. Device (1) according to claim 2 **characterized in that** N is equal to 7.

4. Device (1) according to any one of the claims 1 to 3 **characterized in that** said means for discharging (4) filtered liquid comprise collectors (10) of filtered liquid provided within said chamber (6), each of which enables the collection of filtered liquid by several series of membrane filtration modules (2).

5. Device (1) according to claims 2 or 3, and 4 **characterized in that** said collectors (10) of filtered liquid each enable the collection of filtered liquid by series of membrane filtration modules of a same bundle (11).

6. Device (1) according to claim 5 **characterized in that** collectors (10) are provided at one extremity of the device while others are provided at the opposite extremity of said device (1).

7. Device (1) according to any one of the claims 4 to 6 **characterized in that** said collectors (10) are connected, within said chamber (6), to outlet pipes (12, 12a) each outlet pipe (12, 12a) serving a part of the collectors (10).

8. Device (1) according to any one of the claims 1 to 7 **characterized in that** stops (13) are positioned at the extremities of said series of membrane filtration modules (2).

9. Device (1) according to any one of the claims 1 to 8 **characterized in that** longitudinal rods (14) are provided in parallel to said series of membrane filtration modules (2).

10. Device (1) according to claims 8 and 9 **characterized in that** certain among said rods (14) have extremities that can be fixedly attached to said stops (13).

11. Device (1) according to any one of the claims 8 to 10 when it depends on the claims 4 to 7 **characterized in that** certain among said rods (14) have extremities that can be fixedly attached to said collectors (10).

12. Device (1) according to one of the claims 1 to 11 **characterized in that** said chamber (6) has at least one hemispherical extremity (7).
